# EUROPÄISCHE PATENTSCHRIFT

(11) **EP 2 564 167 B1**
(45) Veröffentlichungstag und Bekanntmachung des Hinweises auf die Patenterteilung: **07.12.2016**
(21) Anmeldenummer: 11726049.7
(22) Anmeldetag: 20.04.2011
(51) Int. Cl.: G01D 11/24, G01D 11/30, F16B 21/04

(54) **BEFESTIGUNGSVORRICHTUNG ZUR BEFESTIGUNG EINER BAUGRUPPE IN EINER ÖFFNUNG EINER WAND EINES FAHRZEUGS**
FASTENING DEVICE FOR FASTENING AN ASSEMBLY IN AN OPENING OF A WALL OF A VEHICLE
DISPOSITIF DE FIXATION DESTINÉ À FIXER UN MODULE DANS UNE OUVERTURE D'UNE PAROI D'UN VÉHICULE

(30) Priorität: 19.05.2010 DE 102010020959; 30.04.2010 DE 102010019092
(43) Veröffentlichungstag der Anmeldung: 06.03.2013
(73) Patentinhaber: Continental Automotive GmbH, 30165 Hannover (DE)
(72) Erfinder: PLANKL, Christian, 93055 Regensburg (DE); WEINACHT, Michael, 93092 Barbing (DE)
(74) Vertreter: Büchner, Jörg
(86) Internationale Anmeldenummer: PCT/DE2011/000433
(87) Internationale Veröffentlichungsnummer: WO 2011/134456

(56) Entgegenhaltungen:
- DE-A1- 4 331 795
- DE-A1-102008 048 318
- US-A- 5 368 427

## Beschreibung

Die Erfindung betrifft eine Befestigungsvorrichtung zur Befestigung einer Baugruppe in einer Öffnung einer Wand eines Fahrzeugs gemäß dem Oberbegriff von Anspruch 1.

### Stand der Technik

Bauteile, insbesondere Sensoren (z.B. für Rückhaltesysteme) werden in der Automobilindustrie auf unterschiedliche Weise am Fahrzeug befestigt. Typischerweise werden Befestigungsformen wie Anschrauben, Nieten und Kleben angewendet. Speziell bei Sensoren in sicherheitskritischer Anwendung wie z.B. Airbag-Systemen ist die sichere Montage von entscheidender Bedeutung. Zum einen muss die korrekte Montage bei Verlassen des Werkes sichergestellt sein. Gleichzeitig aber muss der Sensor über die gesamte Lebensdauer, bei Reparaturen u.ä. ebenfalls sicher in der richtigen Lage und Position montiert bleiben oder sicher austauschbar sein.

Bei heutigen Sensoren, die z.B. per Anschraubung befestigt werden, wird daher in vielen Fällen die Montage dokumentiert. Dies kann z.B. erfolgen, indem beim Anschraubprozess des Sensors Drehmoment und Drehwinkel überwacht und aufgezeichnet werden.

Aus der Druckschrift DE 199 23 985 A1 ist eine Sensorbaugruppe bekannt, bei der das Gehäuse eines Luftdrucksensors, der zur Seitenaufprallsensierung verwendet wird, über Befestigungsmittel, beispielsweise Schrauben, an einer Wand im Fahrzeug befestigt wird. Dabei weist die Fahrzeugtür vorzugweise eine zweiteilige Struktur mit einem zum Fahrzeuginneren liegenden Trockenraum und einen zum Außenblech hinweisenden Feuchtraum sowie eine dazwischen liegende Trennwand auf. An dieser Trennwand wird der Luftdrucksensor angeordnet. Einerseits muss dieser die Luftdruckänderungen im Feuchtraum messen, andererseits die elektrischen Komponenten oder zumindest die Stecker und Verkabelung im elektrisch sichereren Trockenraum geführt werden.

Die Trennwand weist dazu eine Öffnung auf, durch welche hindurch der Luftdruck zu einem im Trockenraum angeordneten sogenannten Trockenraumsensor geleitet wird. Bei einem Feuchtraumsensor befindet sich der Stecker im Feuchtraum. Er wird an einer Öffnung der Trennwand befestigt. Durch Anpassen des Befestigungselements wird gleichzeitig die Öffnung in der Trennwand verschlossen.

Eine gattungsbildende Befestigungsvorrichtung ist beispielsweise aus der DE 10 2008 048 318 bekannt. Anstelle einer Anschraubmontage wird dort eine Bajonettverschlußlösung vorgestellt, bei der in einem Trägerelement drehbar angeordnet ein Halteelement mit zumindest einem, vorzugsweise zumindest zwei Halteflügeln ist, wobei die Halteflügel in einer ersten Drehstellung in die Öffnung der Wand eingeführt werden können, in der zweiten Drehstellung die Wand hintergreifen und so Trägerelement, Halteelement und daran befindliche Baugruppe an der Wand befestigen. Dadurch wird eine werkzeugfreie, schnelle und zugleich dennoch sichere Montage möglich. Eine oder mehrere Trägernasen am Trägerelement können ein Mitdrehen des Trägerelements beim Verdrehen verhindern und eine zusätzliche Sperreinheit ein Zurückdrehen des Halteelements nach Erreichen einer vorgegebenen, beispielsweise der vorgesehenen Endposition verhindern. Verdrehen des Halteelementes gegenüber dem Trägerelement erfolgt dabei per Hand durch Ergreifen des Halteelements.

DE 43 31 795 offenbart eine Befestigungsvorrichtung mit einem Trägerelement zur Auflage an der Wand, einem Halteelement mit einem Halteflügel zum Befestigen der Befestigungsvorrichtung in der Öffnung der Wand und einem am Halteelement angeordneten Drehflügel.

Die Aufgabe der vorliegenden Erfindung ist es, eine derartige Befestigungsvorrichtung so weiterzubilden, dass die werkzeugfreie Montage leicht und sicher möglich ist.

Diese Aufgabe wird durch die Merkmale der unabhängigen Ansprüche gelöst. Vorteilhafte Weiterbildungen der Erfindung ergeben sich aus den Unteransprüchen, wobei auch Kombinationen und Weiterbildungen einzelner Merkmale miteinander denkbar sind.

Will man nämlich eine größere Anzahl derartiger Baugruppen in industrieller Fertigung am Band per Hand in Fahrzeugen eventuell auch an schwer zugänglichen Stellen montieren lassen, ist eine ergonomische Formung wünschenswert und muss zudem sichergestellt werden, dass eine erforderliche Kraft in Drehrichtung wie auch zur Anpressung an die Wand bewirkt wird und zwar unabhängig von der jeweiligen Stärke des jeweiligen Montierers und der Anzahl an Wiederholungen.

Die Erfindung wird nun nachfolgend anhand von Ausführungsbeispielen unter Zuhilfenahme der Figuren näher erläutert. In den Figuren werden immer Ansichten genau eines Ausführungsbeispieles in den unterschiedlichen Positionen und mit unterschiedlichen Einschnitten zur Darstellung der Funktionsweise im Inneren dargestellt. Die anspruchsgemäße Lehre definiert sich jedoch durch die Patentansprüche und ist nicht allein beschränkt auf dieses eine Ausführungsbeispiel zu verstehen.

Im Folgenden können funktional gleiche und/oder gleiche Elemente mit den gleichen Bezugsziffern bezeichnet sein. Zudem wurde versucht, die Bezugsziffern hierarchisch zu ordnen und gibt die 1. Stelle eine Bezugsziffer immer das zugehörige Gesamtelement an.

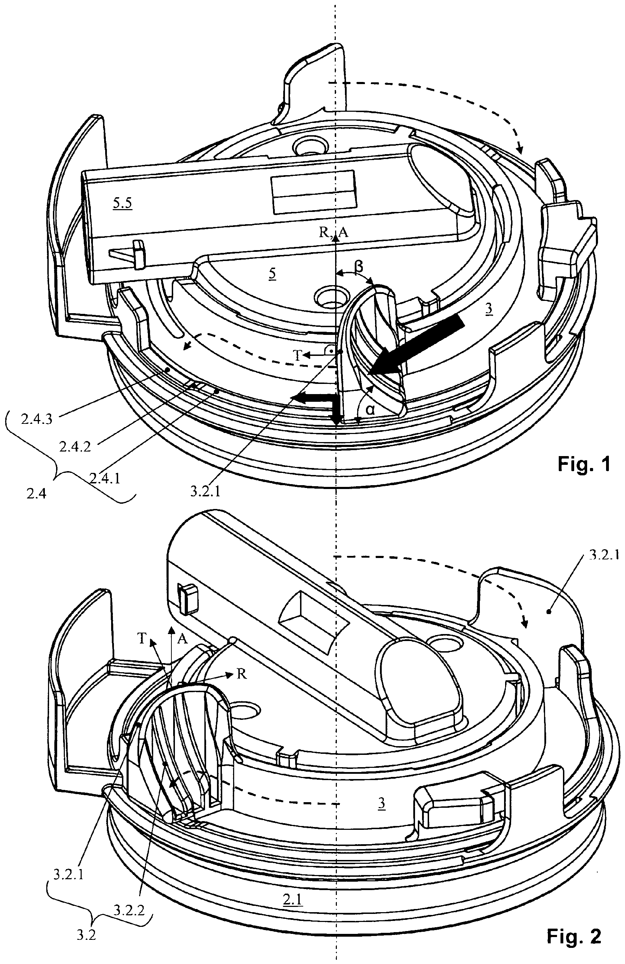

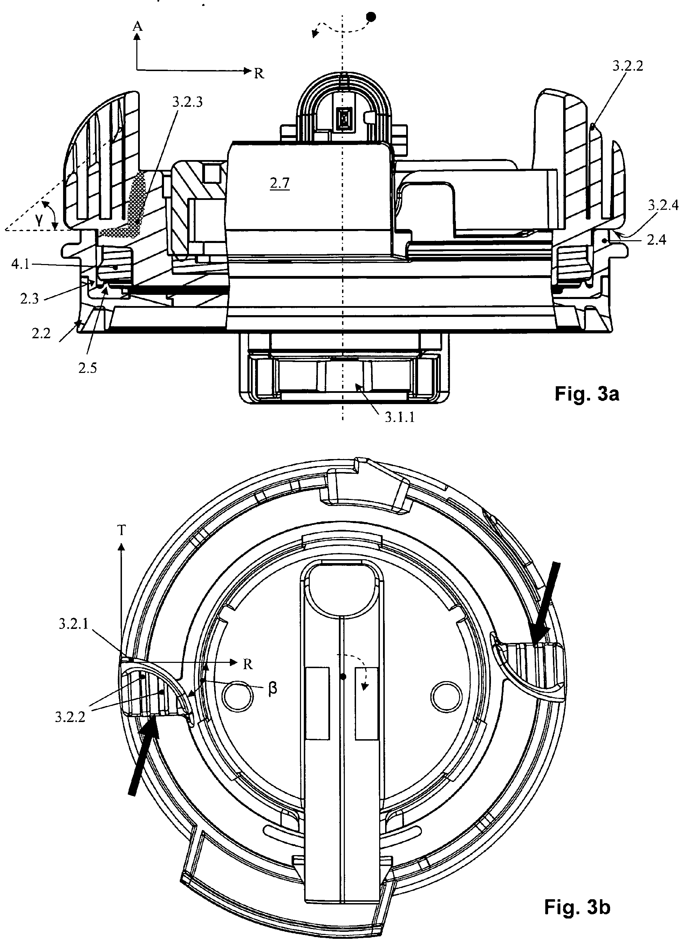

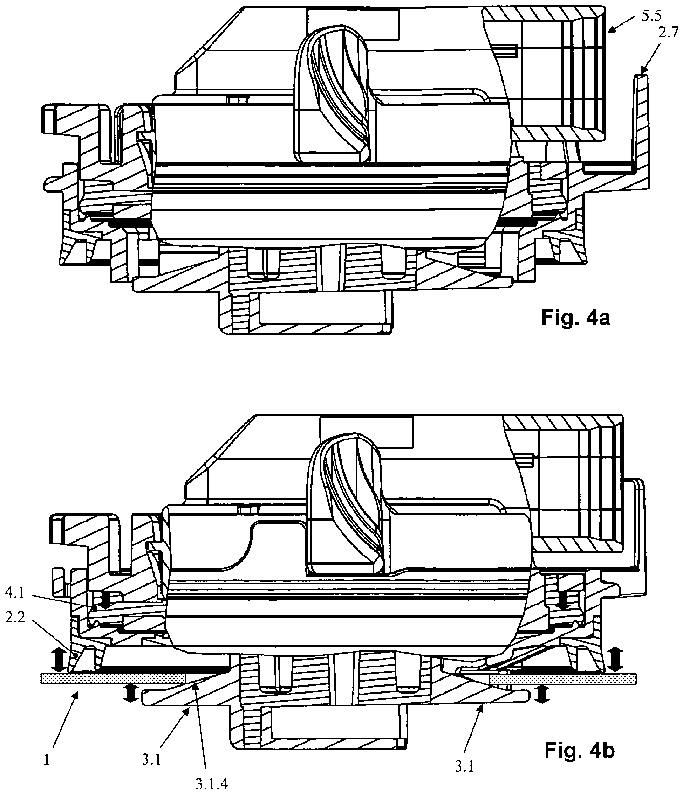

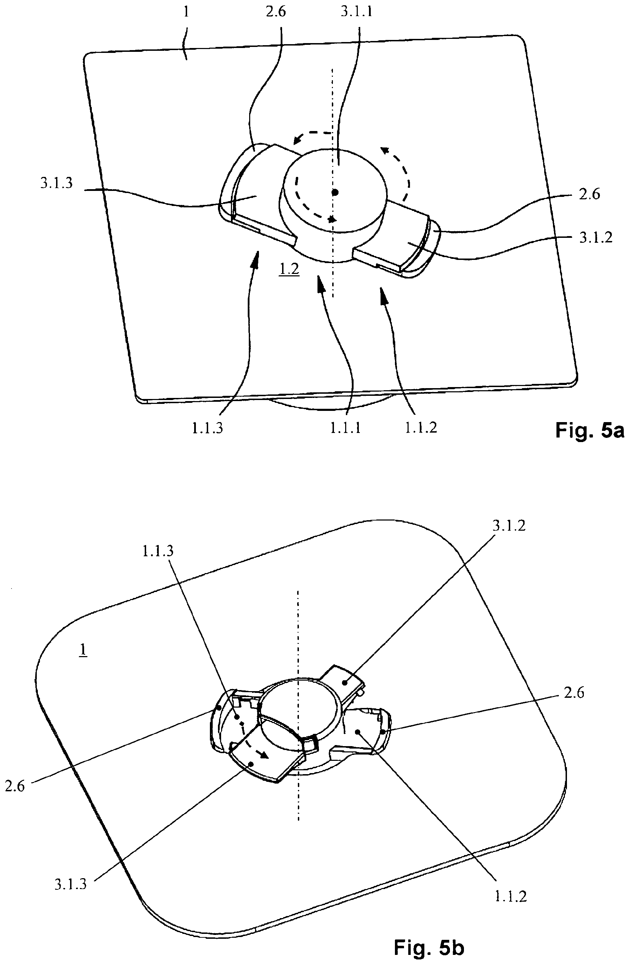

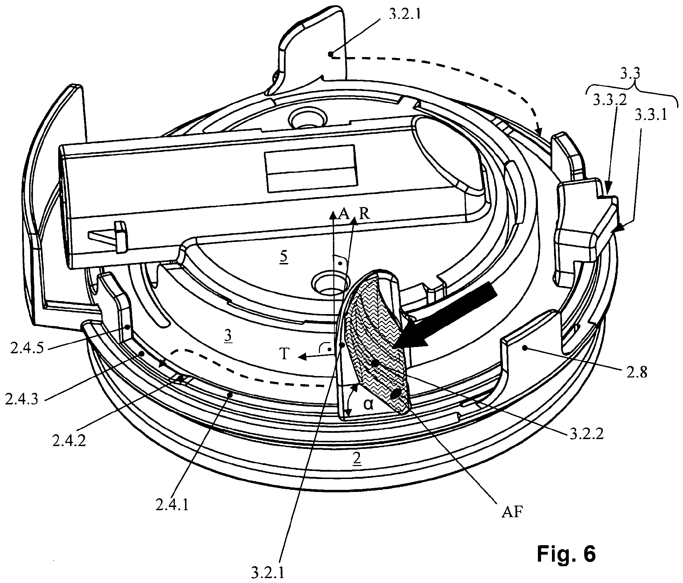

Die Figuren 1-5 sind mithilfe der beiliegenden Bezugszeichenliste weitgehend selbsterklärend. Ergänzend wird ausdrücklich auf die teilweise bereits in der gattungsbildenden Anmeldung DE 10 2008 048 318 A1 beschriebenen Teile und Funktionen Bezug genommen.

Figur 1 zeigt die Befestigungsvorrichtung in der Anfangsposition und skizziert gleichzeitig den Drehweg, über den das Halteelement 3 durch Kraftwirkung auf die Drehflügel 3.2 in die in Figur 2 gezeigte Endposition gebracht wird. Entscheidend für die vorliegende Erfindung ist dabei, dass das Halteelement 3 nicht mehr ganzflächig und unförmig erfasst und verdreht werden muss, sondern durch die Drehflügel 3.2 die Krafteinbringung gezielt radial außen und damit mit bestmöglichen Drehmoment zur Drehachse und zugleich vorzugsweise ergonomisch gut greifbar und zugleich mit einer Kraftwirkung zumindest in tangentialer Richtung T als auch axialer Richtung A zur Wand 1 hin erfolgt. Dazu ist die Angriffsfläche AF in diesem bevorzugten Ausführungsbeispiel fingerkuppenförmig gewölbt und insbesondere zumindest in Drehrichtung beim Befestigen (zum Öffnen würde entgegengesetzt gedreht) zur Drehrichtung und zur Wand hin, also in tangentialer Richtung T mit dem Winkel Alpha geneigt. Diese Neigung um die Winkel Alpha bewirkt eine Verteilung der eingeprägten Kraft sowohl in tangentialer Richtung T zur Erzeugung der Drehbewegung als auch in axiale Richtung A zur Wand hin zur Anpressung der Befestigungsvorrichtung während des Drehens.

Zudem ist die Angriffsfläche AF auch in radiale Richtung R um den Winkel Beta und in axiale Richtung A um den Winkel Gamma geneigt, so dass auch ein Teil der Kraft in radiale Richtung R wirkt und somit ein Abrutschen der Fingerkuppen beim Verdrehen verhindert wird.

Jeder Drehflügel 3.2 besteht aus einer zur Drehrichtung T in etwa senkrechten beziehungsweise zur axialen Richtung A parallelen Wand 3.2.1. Diese Wand 3.2.1 ist durch zumindest zwei zur Wand und damit tangentialen Richtung T in etwa senkrechte, in axiale Richtung A wiederum parallele Stege 3.2.2 verstärkt. Die Wand 3.2.1 und Stege 3.2.2 sind also zumindest im wesentlichen parallel zur axialen Richtung A. Wird also das Halteelement 3 in einem Spritzgußwerkzeug gefertigt, kann das Halteelement 3 aus dem Werkzeug durch eine einfache axiale Bewegung ausgeschoben werden.

Die Stege 3.2.2 erstrecken sich von dem Übergangsbereich 3.2.3 zwischen Halteelement und Drehflügel aus über zumindest einen Teil der Fläche der Wand 3.2.1 des Drehflügels und sind zur Angriffsfläche AF hin so abgeschrägt, dass sich insgesamt eine zumindest in Drehrichtung zur Drehrichtung und zur Wand hin geneigte Angriffsfläche AF ergibt. Durch die gegenüber der Wand 3.2.1 geringere axiale Höhe der Stege 3.2.2 und deren Abschrägung entsteht also faktisch für die darauf liegenden Fingerkuppen eine schräge Angriffsfläche AF.

Die Stege weisen untereinander einen Abstand in radiale Richtung zueinander von höchstens 5 mm auf und wirken somit für Fingerkuppe quasi vollflächig, d.h. bei den doch nicht so hohen erforderlichen Dreh- und Anpresskräften kommt es zu keinem nennenswerten Einschneiden der Stege in die Fingerkuppe, sondern wirkt die Angriffsfläche AF eher als vollflächig.

Die Befestigungsvorrichtung weist vorzugsweise zwei Drehflügel (3.2) auf, die um zumindest näherungsweise 180 Grad zueinander versetzt sind, so dass ein gleichmäßiges und verkantungsfreies Anpressen und Drehen gewährleistet ist und die natürliche Handstellung beim Eindrehen genutzt wird.

Sowohl die Wand 3.2.1 als auch deren Stege 3.2.2 verlaufen somit also zueinander in axialer Richtung A parallel als auch parallel zur Drehachse. Dadurch ist es möglich, das gesamte Halteelement 3 mitsamt den Drehflügel 3.2 direkt aus einer Spritzgußform zu entnehmen, ohne dass dabei wegen geneigter Winkel besondere Werkzeuge erforderlich wären. Andererseits entsteht durch die Abschrägung der Stege die gewünschte geneigte Form der Angriffsfläche AF.

### Bezugszeichenliste

- 1: Wand
- 1.1: Öffnung
- 1.1.1: innerer kreisförmiger Öffnungsbereich
- 1.1.2: Öffnungsbereich für den schmaleren Halteflügel
- 1.1.3: Öffnungsbereich für den breiteren Halteflügel
- 1.2: Randzone der Wand um die Öffnung, in der die Halteflügel hintergreifen
- 2: Trägerelement
- 2.1: Trägergrundkörper
- 2.2: Dichtelement am Trägerelement zur Wand hin
- 2.3: Aussparung für Dichtelement und Spielraum
- 2.4: Randabschnitt am Trägerelement
- 2.4.1.: erster Wegabschnitt auf dem Randabschnitt
- 2.4.2.: zweiter Wegabschnitt auf dem Randabschnitt
- 2.4.3.: Einbuchtung auf dem Randabschnitt
- 2.4.4.: Anfangsanschlag am Randabschnitt
- 2.4.5.: Endanschlag am Randabschnitt
- 2.5: Ausformung am Trägerelement zum inneren Dichtungselement zwischen Trägerelement und Halteelement
- 2.6: Trägernasen am Trägerelement
- 2.7: Steckbereichsblende
- 2.8: Rückdrehsicherungslappen
- 3: Halteelement
- 3.1: Halteflügel
- 3.1.1.: zentraler Verbindungsbereich mit Spritzschutz für Kanal in der Sensorbaugruppe
- 3.1.2.: schmalerer Halteflügel
- 3.1.3.: breiterer Halteflügel
- 3.1.4.: Innenseite der Halteflügel zur Wand hin
- 3.2: Drehflügel
- 3.2.1.: Wand des Drehflügels
- 3.2.2.: Versteifungsstege am Drehflügel
- 3.2.3.: Übergangsbereich vom Drehflügel zum restlichen Halteelement
- 3.2.4.: Kontaktbereich des Drehflügels zum Randabschnitt
- 3.3: Rückdrehsicherungshaken
- 3.3.1: Rampensegment am Rückdrehsicherungshaken
- 3.3.2: Anschlagsegment am Rückdrehsicherungshaken
- 4.1: Dichtelement im Hohlraum
- 5: Sensorbaugruppe
- 5.5: Elektrischer Steckkontakt

- AF: Angriffsfläche in Drehrichtung zum Befestigen
- A: axiale Richtung, d.h. Richtung der Achse
- R: radiale Richtung, d.h. Richtung zur Achse hin bzw. dem Radius entsprechend nach Außen
- T: tangentiale Richtung
- α: Neigungswinkel der Angriffsfläche in tangentiale Richtung
- β: Neigung der Angriffsfläche in radiale Richtung
- γ: Neigung der Angriffsfläche in axiale Richtung

## Patentansprüche

1. Befestigungsvorrichtung zur Befestigung einer Baugruppe (5) in einer Öffnung einer Wand eines Fahrzeugs, wobei die Befestigungsvorrichtung folgende Merkmale aufweist:
- ein Trägerelement (2) zur Auflage an der Wand (1), und
- ein Halteelement (3) mit zumindest einem Halteflügel (3.1) zum Befestigen der Befestigungsvorrichtung in der Öffnung (1.1) der Wand, wobei das Halteelement (3) zur Befestigung der Befestigungsvorrichtung gegenüber dem Trägerelement (2) drehbar angeordnet ist,
- **dadurch gekennzeichnet, dass**
- am Halteelement (3) zumindest ein Drehflügel (3.2) angeordnet ist, welcher in die Drehrichtung zum Befestigen der Befestigungsvorrichtung eine Angriffsfläche (AF) aufweist, welche zumindest in Drehrichtung (T) zur Drehrichtung (T) und zur Wand (1) hin geneigt (α) ist.

2. Befestigungsvorrichtung gemäß Anspruch 1, **dadurch gekennzeichnet, dass** der Drehflügel (3.2) aus einer zur Drehachse (A) in etwa parallelen Wand (3.2.1) besteht und diese Wand (3.2.1) durch zumindest zwei zur Wand (3.2.1) in etwa senkrechte, zur Drehachse aber ebenfalls in etwa parallele Stege (3.2.2) verstärkt ist, wobei die Stege (3.2.2) sich von dem Übergangsbereich (3.2.3) zwischen Halteelement und Drehflügel aus über zumindest einen Teil der Fläche der Wand (3.2.1) des Drehflügels erstrecken und zur Angriffsfläche (AF) hin so abgeschrägt sind, dass sich insgesamt eine zumindest in Drehrichtung zur Drehrichtung und zur Wand hin geneigte Angriffsfläche (AF) ergibt.

3. Befestigungsvorrichtung gemäß Anspruch 1 oder 2, **dadurch gekennzeichnet, dass** der Drehflügel (3.2) einstückig aus dem Material des Halteelements ausgebildet, vorzugsweise kunststoffgespritzt ist.

4. Befestigungsvorrichtung gemäß einem der vorangehenden Ansprüche, **dadurch gekennzeichnet, dass** die Randbereiche der Wand (3.2.1) und/oder der Stege (3.2.2) der Drehflügel (3.2) abgerundet sind.

5. Befestigungsvorrichtung gemäß einem der vorangehenden Ansprüche, **dadurch gekennzeichnet, dass** die Angriffsfläche (AF) eine fingerkuppenartig geformte Wölbung aufweist.

6. Befestigungsvorrichtung gemäß einem der vorangehenden Ansprüche, **dadurch gekennzeichnet, dass** die Stege untereinander einen Abstand von höchstens 5 mm aufweisen

7. Befestigungsvorrichtung gemäß einem der vorangehenden Ansprüche, **dadurch gekennzeichnet, dass** der Drehflügel am Halteelement außen axial nach oben gerichtet und mit einer geneigten Angriffsfläche ausgebildet ist.

8. Befestigungsvorrichtung gemäß einem der vorangehenden Ansprüche, **dadurch gekennzeichnet, dass** die Wölbung der bzw. des Drehflügel zudem eine Neigung kleiner 90 Grad in axiale Richtung aufweist.

9. Befestigungsvorrichtung gemäß einem der vorangehenden Ansprüche, **dadurch gekennzeichnet, dass** zwei Drehflügel (3.2) um zumindest näherungsweise 180 Grad zueinander versetzt vorgesehen sind.

10. Sensorelement mit einer Befestigungsvorrichtung gemäß einem der Ansprüche 1 bis 9.

## Claims

1. An attachment device for attaching a module (5) in an opening of a wall of a vehicle, wherein the attachment device comprises the following features:
- a carrier element (2) for resting on the wall (1), and
- a holding element (3) with at least one holding blade (3.1) for attaching the attachment device in the opening (1.1) of the wall, wherein the holding element (3) is pivoted for attaching the attachment device opposite the carrier element (2),
- **characterized in that**
- on the holding element (3), at least one rotary blade (3.2) is arranged which comprises a contact surface (AF) in the direction of rotation for attaching the attachment device, which is inclined (α) at least in the direction of rotation (T) towards the direction of rotation (T) and towards the wall (1).

2. The attachment device according to claim 1, **characterized in that** the rotary blade (3.2) consists of a wall (3.2.1) which is approximately parallel to the axis of rotation (A) and said wall (3.2.1) is reinforced by at least two bridges (3.2.2) which are approximately vertical to the wall (3.2.1) and however also approximately parallel to the axis of rotation, wherein the bridges (3.2.2) extend from the transition area (3.2.3) between the holding element and the rotary blade over at least a part of the surface of the wall (3.2.1) of the rotary blade and are beveled in the direction of the contact surface (AF) in such a manner that overall, a contact surface (AF) emerges which is inclined at least in the direction of rotation towards the direction of rotation and towards the wall.

3. The attachment device according to claim 1 or 2, **characterized in that** the rotary blade (3.2) is formed as a single part from the material of the holding element, preferably plastic injection-molded.

4. The attachment device according to any one of the preceding claims, **characterized in that** the edge area of the wall (3.2.1) and/or of the bridges (3.2.2) of the rotary blades (3.2) are rounded.

5. The attachment device according to any one of the preceding claims, **characterized in that** the contact surface (AF) comprises a fingertip-like formed curvature.

6. The attachment device according to any one of the preceding claims, **characterized in that** the bridges have a distance from each other of a maximum of 5 mm.

7. The attachment device according to any one of the preceding claims, **characterized in that** the rotary blade on the holding element on the outside is pointing upwards axially and is designed with an inclined contact surface.

8. The attachment device according to any one of the preceding claims, **characterized in that** the curvature of the rotary blade(s) additionally has an inclination of less than 90 degrees in the axial direction.

9. The attachment device according to any one of the preceding claims, **characterized in that** two rotary blades (3.2) are provided offset by at least approximately 180 degrees in relation to each other.

10. A sensor element with an attachment device according to any one of claims 1 to 9.

## Revendications

1. Dispositif de fixation pour la fixation d'un ensemble (5) dans une ouverture d'une paroi d'un véhicule, le dispositif de fixation présentant les caractéristiques suivantes :
- un élément support (2) pour la pose sur la paroi (1), et
- un élément de maintien (3) avec au moins une aile de maintien (3.1) pour la fixation du dispositif de fixation dans l'ouverture (1.1) de la paroi, l'élément de maintien (3) pour la fixation du dispositif de fixation étant disposé de façon pivotante par rapport à l'élément support (2),
- **caractérisé en ce que**
- au moins une aile pivotante (3.2) est disposée sur l'élément de maintien, laquelle présente, dans le sens de rotation, une surface d'attaque (AF) pour la fixation du dispositif de fixation, laquelle surface est, au moins dans le sens de rotation (T), inclinée (α) vers le sens de rotation (T) et vers la paroi (1).

2. Dispositif de fixation selon la revendication 1, **caractérisé en ce que** l'aile pivotante (3.2) se compose d'une paroi (3.2.1) sensiblement parallèle à l'axe de rotation (A) et **en ce que** ladite paroi (3.2.1) est renforcée par au moins deux nervures (3.2.2) sensiblement verticales par rapport à la paroi (3.2.1), mais également sensiblement parallèles par rapport à l'axe de rotation, les nervures (3.2.2) s'étendant à partir de la zone de transition (3.2.3) entre l'élément de maintien et l'aile pivotante sur au moins une partie de la surface de la paroi (3.2.1) de l'aile pivotante et étant biseautées vers la surface d'attaque (AF) de telle sorte que, au moins dans le sens de rotation, une surface d'attaque (AF) inclinée vers le sens de rotation et vers la paroi en résulte dans l'ensemble.

3. Dispositif de fixation selon la revendication 1 ou 2, **caractérisé en ce que** l'aile pivotante (3.2) est formée d'une pièce dans le matériau de l'élément de maintien, de préférence par moulage par injection plastique.

4. Dispositif de fixation selon l'une des revendications précédentes, **caractérisé en ce que les** zones de bord de la paroi (3.2.1) et/ou des nervures (3.2.2) des ailes pivotantes (3.2) sont arrondies.

5. Dispositif de fixation selon l'une des revendications précédentes, **caractérisé en ce que** la surface d'attaque (AF) présente un bombement en forme de bout de doigt.

6. Dispositif de fixation selon l'une des revendications précédentes, **caractérisé en ce que** les nervures présentent une distance entre elles de 5 mm au maximum.

7. Dispositif de fixation selon l'une des revendications précédentes, **caractérisé en ce que** l'aile pivotante sur l'élément de maintien est orientée à l'extérieur de façon axiale vers le haut et est formée avec une surface d'attaque inclinée.

8. Dispositif de fixation selon l'une des revendications précédentes, **caractérisé en ce que** le bombement des ou de l'aile(s) de rotation présente en outre une inclinaison inférieure à 90 degrés dans la direction axiale.

9. Dispositif de fixation selon l'une des revendications précédentes, **caractérisé en ce que** deux ailes pivotantes (3.2) sont prévues décalées d'au moins approximativement 180 degrés l'une par rapport à l'autre.

10. Élément détecteur avec un dispositif de fixation selon l'une des revendications 1 à 9.
